# EUROPÄISCHE PATENTSCHRIFT

(11) **EP 2 072 295 B1**
(45) Veröffentlichungstag und Bekanntmachung des Hinweises auf die Patenterteilung: **29.02.2012**
(21) Anmeldenummer: 07024948.7
(22) Anmeldetag: 21.12.2007
(51) Int. Cl.: B60H 1/00

(54) **Luftführungsgehäuse für ein Fahrzeug**
Air duct housing for a vehicle
Boîtier de guidage de l'air pour un véhicule

(43) Veröffentlichungstag der Anmeldung: 24.06.2009
(73) Patentinhaber: Behr GmbH & Co. KG, 70469 Stuttgart (DE); Behr France Rouffach SAS, 68250 Rouffach (FR)
(72) Erfinder: Demmerle, Herve, 68320 Wickerschwihr (FR); Grieb, Andreas, 70499 Stuttgart (DE); Kreuzer, Walter, 71229 Leonberg (DE); Satrapa, Alexander, 71069 Sindelfingen (DE); Spörl, Franz, 85104 Wackerstein (DE); Zerelles, Paul, 70197 Stuttgart (DE); Berger, Michael, 71642 Ludwigsburg (DE)
(74) Vertreter: Grauel, Andreas

(56) Entgegenhaltungen:
- EP-A- 0 799 734
- EP-A- 1 607 253
- DE-A1- 19 854 940

## Beschreibung

Die Erfindung betrifft ein Luftführungsgehäuse für ein Fahrzeug gemäß dem Oberbegriff des Anspruches 1.

Aus der DE 10 2005 046 828 A1 ist ein Luftführungsgehäuse für Kraftfahrzeuge bekannt, welches für Belüftungs-, Heizungs- oder Klimaanlagen verwendet werden kann, welches Öffnungen zur Montage von Anschlussteilen, wie Luftzufuhrstutzen. Verschlussdeckeln oder weiteren Gehäuseteilen, aufweist, wobei eine Öffnung von einer Fläche umgeben ist, an der eine Fläche eines montierten Anschlussteils dichtend anliegt, und ein Dichtungsbereich zwischen dem Luftführungsgehäuse und dem Anschlussteil als eine Art Nut-Feder-Verbindung ausgebildet ist, und mindestens eine Verriegelungsvorrichtung vorgesehen ist. Hierbei ist ein Teil der Verriegelungsvorrichtung am Luftführungsgehäuse und ein Teil der Verriegelungsvorrichtung am Anschlussteil ausgebildet. Beim einem in der DE 10 2005 046 828 A1 beschriebenen Teil des Luftführungsgehäuses handelt es sich um den Bereich einer T-förmig ausgebildeten Zusammenführung von Frischluft- und Umluftkanal, an deren langem Schenkel das Gebläsegehäuse anzubringen ist.

Dieser Bereich der Zusammenführung von Frischluft- und Umluftkanal ist üblicherweise als separates Bauteil ausgebildet, wie bspw. auch in der EP 0 678 410 B1 beschrieben.

Aus der EP 1 607 253 A1 ist ein Bauteil für den entsprechenden Bereich des Luftführungsgehäuses beschrieben, welches auch einen T-förmigen Aufbau hat, jedoch erfolgt hierbei die Zuführung eines ersten Luftkanals, bspw. der Frischluft, zum Gebläse in gerader Richtung, während die Zuführung eines zweiten Luftkanals, bspw. der Umluft, durch einen Luftkanal strömt, der etwa senkrecht zum ersten Luftkanal angeordnet ist, so dass beim Einströmen die Luft um ca. 90° umgelenkt wird.

Die EP 0 799 734 A2 zeigt ein Luftführungsgehäuse gemäß Oberbegriff des Anspruchs 1

Ausgehend von diesem Stand der Technik ist es Aufgabe der Erfindung, ein verbessertes Luftführungsgehäuse zur Verfügung zu stellen.

Diese Aufgabe wird gelöst durch ein Luftführungsgehäuse mit den Merkmalen des Anspruchs 1. Vorteilhafte Ausgestaltungen sind Gegenstand der Unteransprüche.

Erfindungsgemäß ist ein Luftführungsgehäuse, bestehend aus mindestens zwei Gehäuseteilen, die miteinander lösbar oder unlösbar verbunden sind, wobei das Luftführungsgehäuse zumindest einen Frischluft-/Umluft-Bereich, an welchen der Frischluftkanal und der Umluftkanal zur Zuführung vom Frischluft und/oder Umluft anschließbar sind, und einen Gebläsebereich, in welchem ein Laufrad eines Gebläses für die Luftansaugung aufnehmbar ist, aufweist, und zumindest ein Teil des Frischluft-/Umluft-Bereichs einstückig mit zumindest einem Teil des Gebläsebereichs spritzgegossen ist. Durch eine einstückige Ausgestaltung verringert sich die Zahl der Schritte im Rahmen der Herstellung und Montage, so dass kostengünstiger produziert werden kann. Auf Grund der verringerten Teilezahl verringern sich zudem die Lagerkosten sowie der Logistikaufwand.

Eine Teilung im Gebläsebereich ist vorzugsweise senkrecht zur Drehachse eines Gebläselaufrades, das in das Luftführungsgehäuse eingebaut ist, vorgesehen. Hierbei ist besonders bevorzugt die Teilung im mittleren Bereich des Gebläselaufrades vorgesehen.

Erfindungsgemäß ist der Teil des Luftführungsgehäuses ein Klimaanlagenbereich, welcher in einer Ebene unterteilt ist. Hierbei dient der Klimaanlagenbereich der Aufnahme eines Filters, Heizers, Zuheizers und/oder Verdampfers. Hierbei ist ein Teil des Klimaanlagenbereichs einstückig mit dem Gebläsebereich und auch einstückig mit dem Frischluft-/Umluft-Bereich ausgebildet. Alternativ dazu, ist die Teilung bevorzugt entlang zweier oder mehrer, insbesondere parallel zueinander versetzter Ebenen ausgebildet.

Alternativ zu einer Teilung senkrecht zur Mittellängsachse des Gebläses kann das Luftführungsgehäuse auch entlang der Längsrichtung des Frischluft-/Umluft-Bereichs unterteilt sein.

Die Mittellängsachse eines ersten zuführenden Kanalbereichs des Frischluft-/Umluft-Bereichs verläuft vorzugsweise in Verlängerung der Mittellängsachse eines im Gebläsebereich angeordneten Laufrades, und die Mittellängsachse des zweiten zuführenden Kanalbereichs des Frischluft-/Umluft-Bereichs ist bevorzugt senkrecht hierzu angeordnet.

Bevorzugt sind die Gehäuseteile aus Kunststoff spritzgegossen. Hierbei können versteifende Elemente, Halter, wie bspw. der Motorhalter, oder Lager für Wellen direkt eingespritzt werden. Eine nachträgliche Montage dieser Elemente kann so entfallen. Im Falle eines Zweikomponenten-Spritzgussverfahrens lassen sich zudem Dichtelemente aus einer Weichkomponente direkt anspritzen, so dass die Zahl der manuellen Schritte im Rahmen der Herstellung und Montage weiter verringert und zudem die Handhabung vereinfacht werden kann. Insbesondere kann u.a. ein Motorhalter für einen Gebläsemotor direkt im Gehäusebereich an einem der Gehäuseteile angeformt sein, so dass eine nachträgliche Montage entfallen kann.

Im Folgenden wird die Erfindung anhand von mehreren Ausführungsbeispielen unter Bezugnahme auf die Zeichnung im Einzelnen erläutert. Es zeigen:
- Fig. 1: eine ausschnittsweise perspektivische Ansicht eines Teils des Luftführungsgehäuses gemäß dem ersten Ausführungsbeispiel,

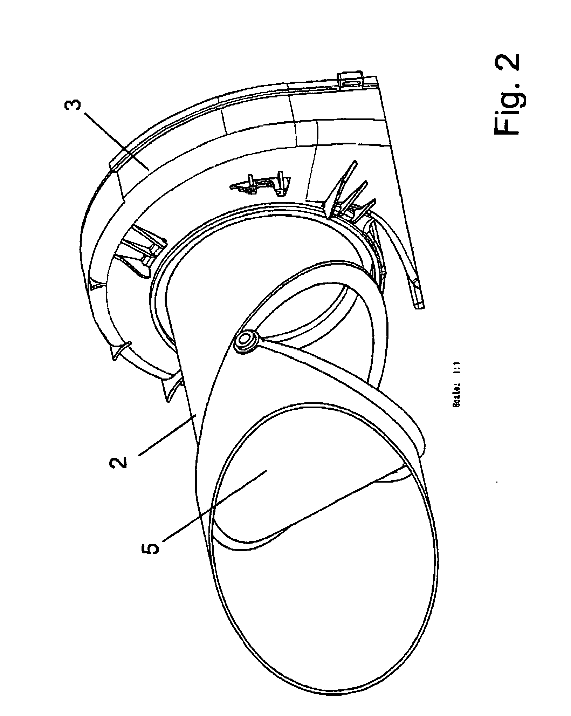

- Fig. 2: eine andere perspektivische Ansicht des Ausschnitts von Fig. 1,

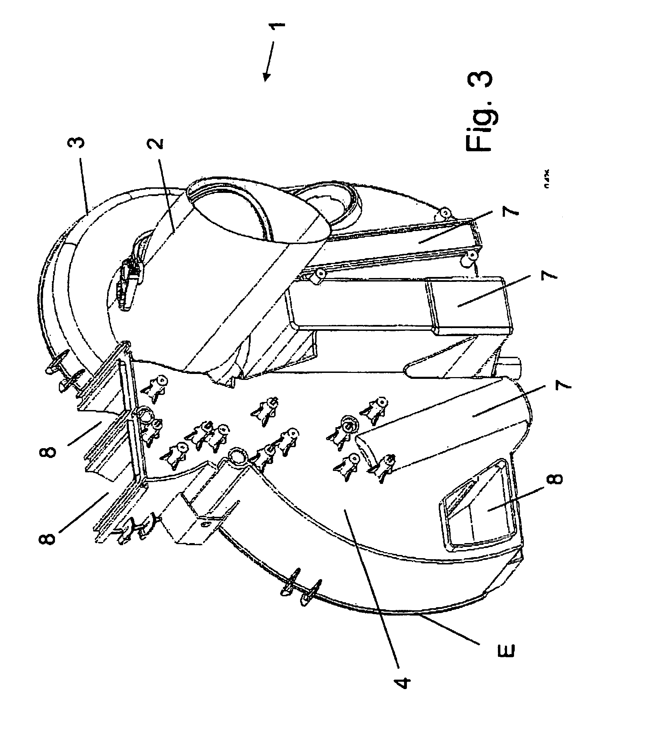

- Fig. 3: eine perspektivische Ansicht des gesamten Teils des Luftführungsgehäuses gemäß dem ersten Ausführungs- beispiel,

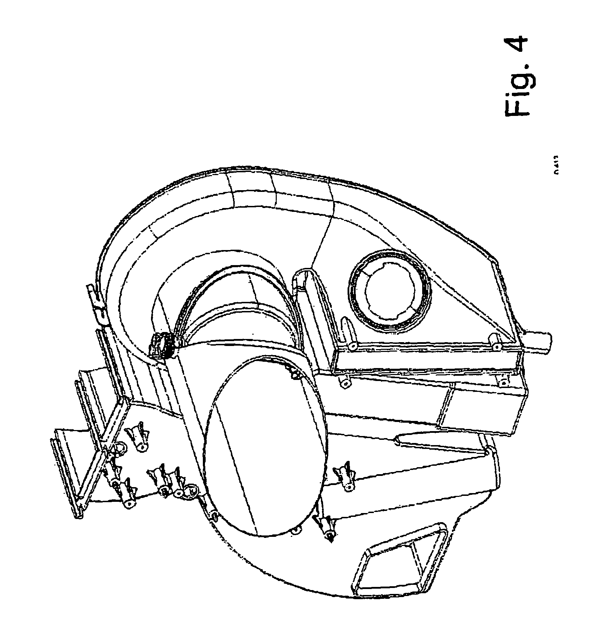

- Fig. 4: eine andere perspektivische Ansicht des Teils des Luft- führungsgehäuses von Fig. 3,
- Fig. 5: eine schematische Schnittdarstellung durch einen Teil des Luftführungsgehäuses mit vertikaler Gehäusetrennung von Fig. 1 in der Klappenstellung "100% Frischluftzufuhr",
- Fig. 6: eine Fig. 5 entsprechende Darstellung in der Klappen- stellung "100% Umluftzufuhr",
- Fig. 7: eine Fig. 5 entsprechende Darstellung in einer Misch- stellung der Klappe, und
- Fig. 8: eine schematische Schnittdarstellung durch einen Teil des Luftführungsgehäuses mit horizontaler Trennung.

Ein Luftführungsgehäuse 1 einer Fahrzeugklimaanlage ist mehrteilig ausgebildet, wobei es durch einzelne Kunststoff-Spritzgussteile gebildet ist. Das Verbinden der einzelnen Teile erfolgt hierbei auf an sich bekannte Weise durch eine lineare und/oder drehende Relativbewegung in Folge derer die beiden zu verbindenden Teile miteinander verriegelt werden. Die Teile können zusätzlich aneinander gesichert sein. Auch andere Verbindungen der einzelnen Teile sind möglich.

Das Luftführungsgehäuse 1 weist in normaler Strömungsrichtung der durch das Luftführungsgehäuse 1 strömenden Luft gesehen einen Frischluft-/Umluft-Bereich 2, einen Gebläsebereich 3 sowie einen Klimaanlagenbereich 4 auf. Hierbei dient der Frischluft-/Umluft-Bereich 2 der Anbindung eines Frischluftkanals sowie eines Umluftkanals, über welche - je nach Stellung einer in das Luftführungsgehäuse 1 eingesetzten Frischluft-/Umluft-Klappe 5 - Frischluft F oder Umluft U in den nachfolgend angeordneten Gebläsebereich 3 gelangen kann. Die Ausgestaltung des Frischluft-/Umluft-Bereichs 2 entspricht hierbei derjenigen, wie in der EP 1 607 253 A1 offenbart.

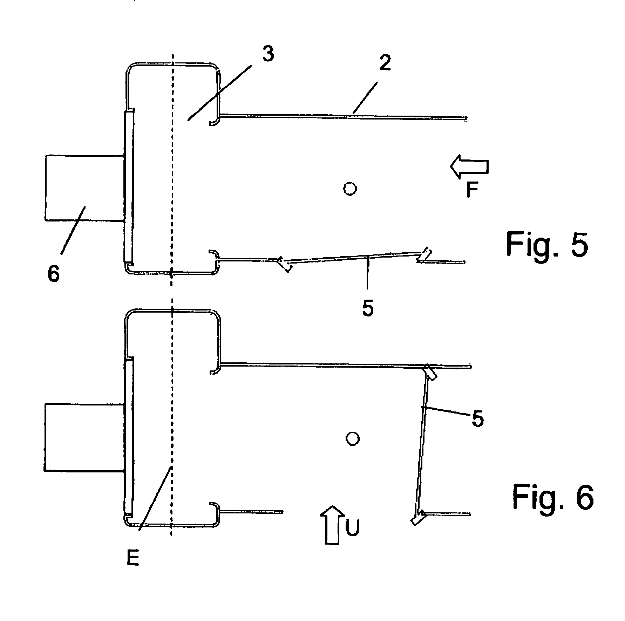

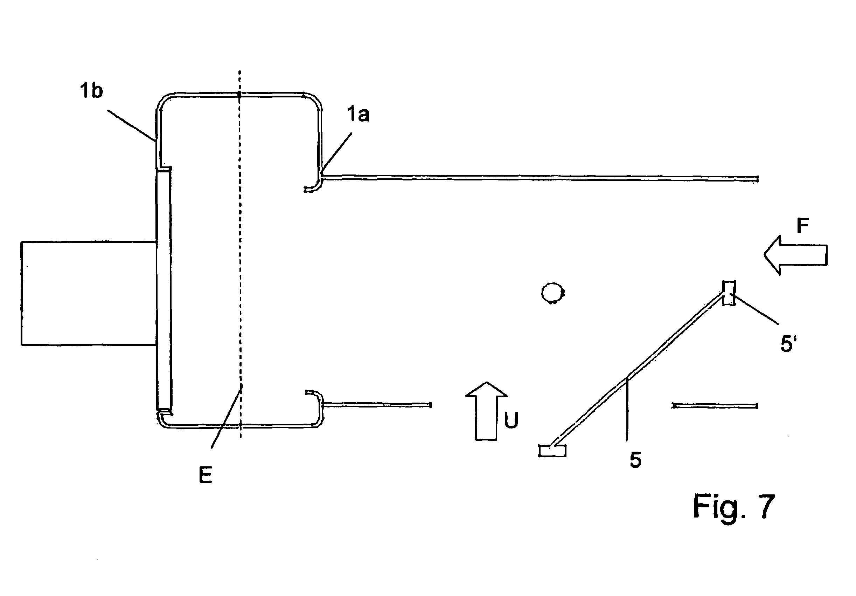

Im nachfolgend dem Frischluft-/Umluft-Bereich 2 angeordneten, spiralförmig ausgebildeten Gebläsebereich 3 ist ein Laufrad (nicht dargestellt) mit einer Drehachse angeordnet, welches von einem Gebläsemotor (nicht dargestellt) angetrieben wird, um Luft anzusaugen und in den Klimaanlagenbereich 4 zu fördern. Hierbei ist auch ein Motorhalter 6, in den Figuren 5 bis 7 angedeutet, ins Luftführungsgehäuse 1 integriert ausgebildet, innerhalb desselben auch der Gebläsemotor angeordnet ist. Die Drehachse verläuft hierbei parallel zur Mittellängsachse des Frischluft-/Umluft-Bereichs 2, vorliegend fallen die beiden Achsen zusammen.

Im Klimaanlagenbereich 4 sind Aufnahmen 7 für einen Filter, den Verdampfer sowie einen Heizer ausgebildet. Diese Aufnahmen 7 haben alle einen Verlauf, der parallel oder zumindest im Wesentlichen parallel zur Mittellängsachse des Frischluft-/Umluft-Bereichs 2 ist. Ferner ist im Klimaanlagenbereich ein Bypass zum Heizer vorgesehen, wie auch ein nach dem Heizer und Bypass angeordneter Mischraum. Vom Mischraum zweigt eine Mehrzahl von Luftkanälen (nicht dargestellt) ab, wofür am Luftführungsgehäuse 1 Anschlüsse 8 vorgesehen sind. Im Klimaanlagenbereich 4 sind zudem eine Mehrzahl von Lager für Klappen und Befestigungsmöglichkeiten für Aktuatoren vorgesehen, welche ebenfalls der parallel oder zumindest im Wesentlichen parallel zur Mittellängsachse des Frischluft-/Umluft-Bereichs 2 abstehen.

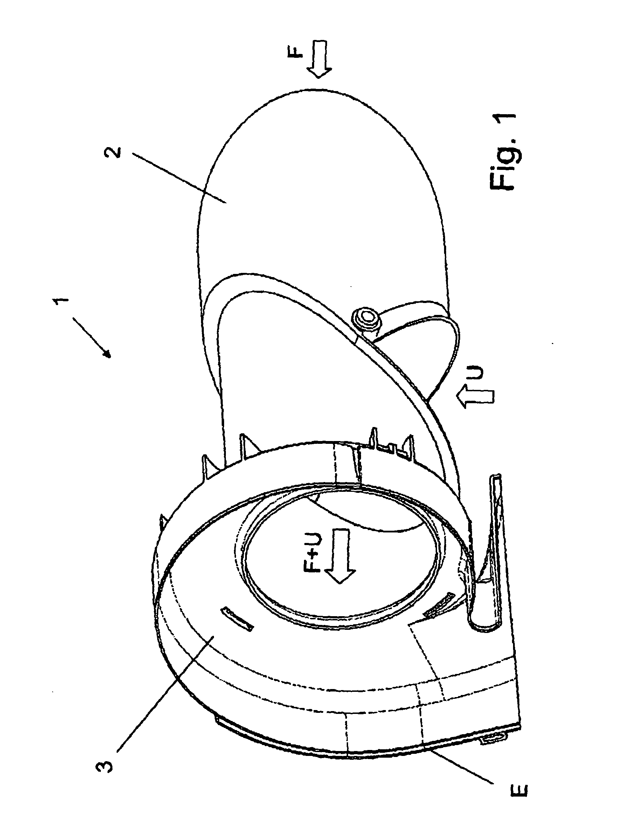

Die Unterteilung des Luftführungsgehäuses 1, welche aus herstellungstechnischen Gründen zwingend erforderlich ist, verläuft gemäß dem ersten Ausführungsbeispiel durch den Gebläsebereich 3, wobei die Unterteilung, wie beispielsweise aus Fig. 1 ersichtlich, vorliegend etwa in der Mittelebene des im Gebläsebereich 3 angeordneten Laufrades verläuft, d.h. senkrecht zur Mittellängsachse des Frischluft-/Umluft-Bereichs 2 verläuft. Das Luftführungsgehäuse 1 ist vorliegend in einer durchgehenden Ebene E unterteilt, die in den Figuren 5 bis 7 gestrichelt dargestellt ist.

Vorliegend ist das Gebläse im fertig montierten und eingebauten Zustand im Fahrzeug mit einer vertikal verlaufenden Drehachse angeordnet, so dass sich eine vertikale Unterteilung des Luftführungsgehäuses 1 in einer Ebene ergibt, die in oder zumindest parallel zu der Mittellängsebene des Fahrzeugs verläuft.

Auf Grund des weiteren Strömungsverlaufs der Luft innerhalb im Wesentlichen einer Ebene, ist auch im nachfolgend angeordneten Klimaanlagenbereich 4 eine etwa mittige Unterteilung des Luftführungsgehäuses 1 möglich. Dies ergibt - abgesehen vom Frischluft-/Umluftbereich 2 und Gebläsebereich 3 einen im Wesentlichen spiegelbildlichen Aufbau der beiden Gehäuseteile 1a und 1b, wobei das zweite Gehäuseteil 1 b nur in den Schnittdarstellungen der Figuren 5 bis 7 angedeutet ist. In den Figuren 5 bis 7 ist zudem die Funktion des Frischluft-/Umluft-Bereichs 2 samt Frischluft-Umluft-Klappe 5 näher dargestellt. Je nach Klappenstellung strömt Frischluft F in gerader Richtung 2, Umluft U um 90° umgelenkt oder sowohl Frisch- als auch Umluft zum Gebläsebereich 2.

In den ersten Gehäuseteil 1a wird u.a. die Frischluft-/Umluftklappe 5 eingesetzt. Dichtungen 5' sind vorliegend am ersten Gehäuseteil 1a direkt angespritzt, wobei die Dichtungen sowohl in einem zweiten Spritzvorgang angespritzt als auch im Rahmen eines Zweikomponenten-Spritzgussverfahrens direkt mit dem Gehäuseteil gegossen werden können. Alternativ können sie auch nach dem Spritzgießen angeklebt werden. Dahingegen wird in den zweiten Gehäuseteil 1b, welcher vorliegend einstückig spritzgegossen mit dem Motorhalter 6 ausgebildet ist, u.a. der Gebläsemotor samt Gebläselaufrad eingesetzt.

Die Unterteilung kann gemäß einer Variante des ersten Ausführungsbeispiels auch seitlich verschoben sein, bspw. in Richtung des Frischluft-/Umluft-Bereichs, so dass am ersten Gehäuseteil beispielsweise nur eine Seitenfläche des Gebläsebereichs angeordnet ist, während die Spiralwände und die andere Seitenfläche vollständig am zweiten Gehäuseteil ausgebildet sind. Entsprechendes gilt auch für die Aufnahmen usw. im Klimaanlagenbereich.

Ferner kann, gemäß einer weiteren Variante des ersten Ausführungsbeispiels, die Unterteilung in zwei parallel zueinander verlaufenden Ebenen verlaufen, wobei bspw. eine mittige Unterteilung im Gebläsebereich und eine seitliche Unterteilung im Klimaanlagenbereich vorgesehen sein kann.

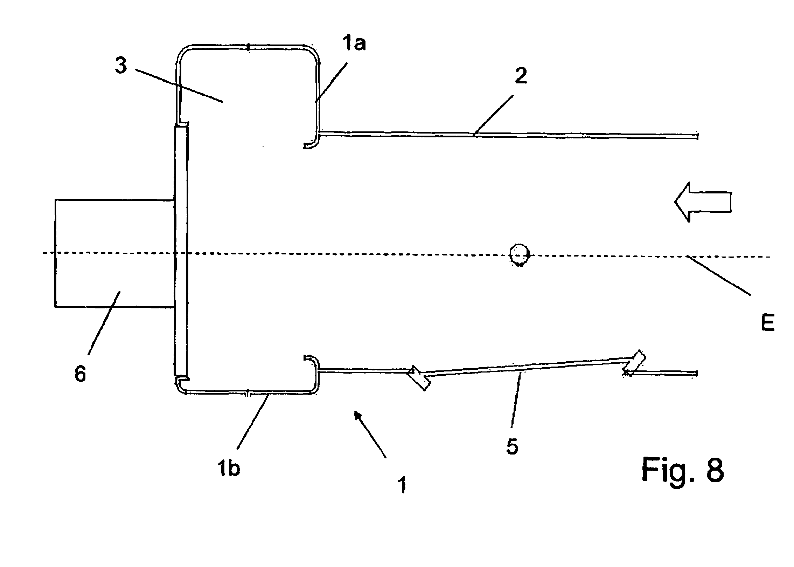

Gemäß dem zweiten, in Fig. 8 dargestellten Ausführungsbeispiel entspricht der Aufbau annähernd dem des ersten Ausführungsbeispiels, jedoch ist eine Unterteilung des Luftführungsgehäuses 1 in einer Ebene E (in Fig. 8 gestrichelt dargestellt) vorgesehen, in welcher die Mittellängsachse des Frischluft-/Umluft-Bereichs 2 verläuft, d.h. auch der Gebläsebereich 3 samt Motorhalter 6 sind entlang dieser Ebene E unterteilt. Im Anschluss an den Gebläsebereich 3 ist eine weitere Unterteilung vorgesehen, wobei der Klimaanlagenbereich (nicht dargestellt) entsprechend dem ersten Ausführungsbeispiel mittig unterteilt ausgebildet ist. Somit ergeben sich vier Gehäuseteile.

## Patentansprüche

1. Luftführungsgehäuse, bestehend aus mindestens zwei Gehäuseteilen (1a, 1b), die miteinander lösbar oder unlösbar verbunden sind, wobei das Luftführungsgehäuse (1) zumindest einen Frischluft-/Umluft-Bereich (2), an weichen der Frischluftkanal und der Umluftkanal zur Zuführung vom Frischluft (F) und/oder Umluft (U) anschließbar sind, und einen Gebläsebereich (3), in welchem ein Laufrad eines Gebläses für die Luftansaugung aufnehmbar ist, aufweist, wobei zumindest ein Teil des Frischluft-/Umluft-Bereichs (2) einstückig mit zumindest einem Teil des Gebläsebereichs (3) spritzgegossen ist,
**dadurch gekennzeichnet dass** der Teil des Luftführungsgehäuses (1) ein Klimaanlagenbereich (4) ist, welcher in einer Ebene (E) unterteilt ist, die sich senkrecht zu Aufnahmen (7) für Verdampfer. Heizer und/oder Filter im Klimaanlagenbereich (4) erstreckt und ein Teil des Klimaanlagenbereichs (4) einstückig mit dem Frischluft-/Umluft-Bereich (2) und dem Gebläsebereich (3) ausgebildet ist und
die Teilung der Gehäuseteile (1a, 1b) in einer durchgehenden Ebene (E) verläuft.

2. Luftführungsgehäuse nach Anspruch 1, **dadurch gekennzeichnet, dass** eine Teilung im Gebläsebereich (3) senkrecht zur Drehachse eines Gebläselaufrades, das in das Luftführungsgehäuse (1) eingebaut ist, vorgesehen ist.

3. Luftführungsgehäuse nach Anspruch 2, **dadurch gekennzeichnet, dass** die Teilung im mittleren Bereich des Gebläselaufrades vorgesehen ist.

4. Luftführungsgehäuse nach einem der vorhergehenden Ansprüche, **dadurch gekennzeichnet, dass** das Luftführungsgehäuse (1) entlang der Längsrichtung des Frischluft-/Umluft-Bereichs (2) unterteilt ist.

5. Luftführungsgehäuse nach einem der vorhergehenden Ansprüche, **dadurch gekennzeichnet, dass** die Mittellängsachse eines ersten zuführenden Kanalbereichs des Frischluft-/Umluft-Bereichs (2) in Verlängerung der Drehachse eines im Gebläsebereich (3) angeordneten Laufrades verläuft, und die Mittellängsachse des zweiten zuführenden Kanalbereichs des Frischluft-/Umluft-Bereichs (2) senkrecht hierzu angeordnet ist.

6. Luftführungsgehäuse nach einem der vorhergehenden Ansprüche, **dadurch gekennzeichnet, dass** ein Motorhalter (6) für einen Gebläsemotor einstückig an einem der Gehäuseteile (1a, 1b) ausgebildet ist.

## Claims

1. Air guiding housing, consisting of at least two housing parts (1a, 1b), which are removable or permanently connected to one another, the air guiding housing (1) having at least one fresh air/circulating air area (2), to which the fresh air duct and the circulating air duct are attachable for the supply of fresh air (F) and/or circulating air (U), and a fan area (3), in which a motor of a fan for the air intake can be accommodated, at least one part of the fresh air/circulating air area (2) being integrally injection molded witch at least one part of the fan area (3),
**characterized in that** the part of the air guiding housing (1) is an air-conditioner area (4), which is divided in a plane (E), which extends perpendicularly to receptacles (7) for vaporizer, heater, and/or filter in the air conditioner area (4), and
a part of the air-conditioner area (4) is integrally formed with the fresh air/circulating air arena (2) and the fan area (3), and
the division of the housing parts (1a, 1b) extends in a continuous plane (E).

2. Air guiding housing according to Claim 1, **characterized in that** a division in the fan area (3) is provided perpendicularly to the rotational axis of a fan rotor, which is installed in the air guiding housing (1).

3. Air guiding housing according to Claim 2, characterize in that the division is provided in the middle area of the fan motor.

4. Air guiding housing according to one of the preceding claims, **characterized in that** the air guiding housing (1) is divided along the longitudinal direction of the fresh air/circulating air area (2).

5. Air guiding housing according to once of the preceding claims, **characterized in that** the central longitudinal axis of a first supplying duct area of the fresh air/circulating air area (2) extends in extension of the rotational axis of a motor arranged in the fan area (3), and the central longitudinal axis of the second supplying duct area of the fresh air/circulating air area (2) is arranged perpendicularly thereto.

6. Air guiding housing according to once of the preceding claims, **characterised in that** a motor folder (6) for a fan motor is integrally formed of one of the housing parts (1a, 1b).

## Revendications

1. Boîtier de guidage d'air se composent d'au moins deux parties de boîtier (1a, 1b) qui sont assemblées l'une à l'autre de maçon amovible ou non amovible, où le boîtier de guidage d'air (1) présente au a moins une zone d'air frais / d'air ambiant (2) à laquelle peuvent être raccordés le conduit d'air frais et le conduit d'air ambiant, pour l'alimentation, à l'avant, en air frais (F) et / ou en air ambiant (U), et une zone de pulseur (3) dans laquelle peut être logée une roue mobile d'un pulseur pour l'aspiration d'air, où au moins une partie de la zone d'air frais / d'air ambiant (2) est moulée par injection, en formant une seule et même zone avec au moins une partie de la zone (3) du pulseur,
**caractérisé en ce que** la partie du boîtier de guidage d'air (1) est une zone (4) du système de climatisation, zone qui est subdivisée en un plan (E) qui s'étend dans la zone (4) du système de climatisation, perpendiculairement aux logements (7) prévus pour l'évaporateur, le dispositif de chauffage et / ou le filtre, et une partie de la zone (4) du système de climatisation est configurée en formant une seule et même zone avec la zone d'air frais / d'air ambiant (2) et avec la zone (3) du pulseur, et la division des parties (1a, 1b) du boîtier s'étend à travers un plan continu (E).

2. Boîtier de guidage d'air selon la revendication 1, **caractérisé en ce qu'**il est prévu une division dans la zone (3) du pulseur, perpendiculairement à l'axe de rotation d'une roue mobile du pulseur, roue qui est montée dans le boîtier de guidage d'air (1).

3. Boîtier de guidage d'air selon la revendication 2, **caractérisé en ce que** la division est prévue dans la zone centrale de la roue mobile du pulseur.

4. Boîtier de guidage d'air selon l'une quelconque des revendications précédentes, **caractérisé en ce que** le boîtier de guidage d'air (1) est subdivisé en suivant la direction longitudinale de la zone d'air frais / d'air ambiant (2).

5. Boîtier de guidage d'air selon l'une quelconque des revendication précédentes, **caractérisé en ce que** l'axe longitudinal médian d'une première zone de conduit d'alimentation de la zone d'air frais / d'air ambiant (2) s'étend dans le prolongement de l'axe de rotation d'une roue mobile disposée dans la zone (3) du pulseur, et l'axe longitudinal médian de la deuxième zone de conduit d'alimentation de la zone d'air frais / d'air ambiant (2) est disposé perpendiculairement audit axe longitudinal médian de ladite première zone de conduit d'alimentation.

6. Boîtier de guidage d'air selon l'une quelconque des revendications précédentes, **caractérisé en ce qu'**un support de moteur (6), prévu pour un moteur de pulser, est configuré en formant une seule et même pièce sur l'une des parties (1a, 1b) du boîtier.
